# EUROPEAN PATENT SPECIFICATION

(11) **EP 4 390 202 B1**
(45) Date of publication and mention of the grant of the patent: **29.10.2025**
(21) Application number: 22306974.1
(22) Date of filing: 21.12.2022
(51) Int. Cl.: F16L 9/08, F16L 9/12, F16L 59/147

(54) **LOOSEFILL INSULATION HOSE CONNECTOR WITH ROUGH INTERNAL SURFACE, LOOSEFILL INSUATION HOSE, AND LOOSEFILL INSULATION INSTALLATION SYSTEM AND METHOD**
ISOLIERSCHLAUCHVERBINDER MIT LOSFÜLLUNG MIT RAUER INNENFLÄCHE, ISOLIERSCHLAUCH MIT LOSFÜLLUNG UND ISOLIERINSTALLATIONSSYSTEM MIT LOSFÜLLUNG UND VERFAHREN
RACCORD DE TUYAU D'ISOLATION EN VRAC AVEC SURFACE INTERNE RUGUEUSE, TUYAU D'ISOLATION EN VRAC ET SYSTÈME ET METHODE D'INSTALLATION D'ISOLATION EN VRAC

(43) Date of publication of application: 26.06.2024
(73) Proprietor: SAINT-GOBAIN ISOVER, 92400 Courbevoie (FR)
(72) Inventor: LUIS, David, 92400 Courbevoie (FR); LOMBARD, Pierre, Pennsylvanie 19355 (US); GOTO, Paula, 92400 Courbevoie (FR); TOULEMON, Delphine, 92400 Courbevoie (FR)
(74) Representative: Murgitroyd & Company

(56) References cited:
- CN-A- 102 909 784
- CN-A- 103 759 079
- CN-A- 110 425 337
- RU-U1- 204 502

## Description

### BACKGROUND OF THE DISCLOSURE

### 1. Field of the Disclosure

The present disclosure relates generally to loose fill insulation installation systems, for example, suitable for installing loose fill insulation to an installation site. The present disclosure relates more particularly to a connector for a loose fill insulation hose operable to convey loose fill insulation from an insulation blowing machine.

### 2. Technical Background

Loose fill insulation is packaged in bags in which the material becomes compacted prior to storage and shipment. When removed from the bags, the insulation separates into clumps. In order to effectively install the insulation material, it is initially conditioned to increase its volume and to reduce its density. Traditionally, pneumatic devices are used to both install the insulation and perform the conditioning. The conditioning process breaks up clumps and alters the arrangement of the fibers so as to "open up' the insulation, conditioning the fiber to a more flake-like form. The conditioned insulation is then applied pneumatically to an area by blowing it through a hose connected to the pneumatic device. The insulation may be moistened and/or treated in the pneumatic device before installation.

While existing systems for installing loose fill insulation are effective, the present inventors have identified certain aspects of these systems that can be improved.

RU 204502 U1 discloses a gas intake shaft contains a shell (1), inside of which a heat-insulating layer (2) made of high-temperature, tear-resistant fibrous thermal insulation is placed, on the inner side of which a protective covering layer (3) is located, made of sheets of heat-resistant and corrosion-resistant steel for high-temperature conditions, along the perimeter of which channels (4) are installed along the flow. Channels (4) and protective sheets (3) are attached to the body (1) using studs (5), nuts and washers (7). Along the perimeter of the inner surface of the shell there are anchors (6), welded to its inner surface, and unloading belts (8), which prevent the thermal insulation from slipping. The sealing coefficient of the thermal insulation can be adjusted using nuts and washers (7).

CN 110425337 A discloses a sewage conveying pipeline for chemical engineering. The sewage conveying pipeline comprises a glass fiber reinforced plastic conveying pipe, the glass fiber reinforced plastic conveying pipe is located in the center of the cross section of a pipe body, the outer side surface of the glass fiber reinforced plastic conveying pipe is coated with a wear-resistant layer, the outer diameter of the wear-resistant layer is the same as the outer diameter of the glass fiber reinforced plastic conveying pipe, the outer surface of the wear-resistant layer is coated with a rubber pad layer, the coating inner diameter of the rubber pad layer is the same as the outer diameter of the wear-resistant layer, the outer side surface of the rubber pad layer is coated with a conveying outer pipe, and the outer diameter of the conveying outer pipe is the same as the outer diameter of the rubber pad layer.

CN 103759079 A discloses a low-noise drainage pipeline. The low-noise drainage pipeline comprises a pipeline body. The low-noise drainage pipeline is characterized in that the surface of the inner wall of the pipeline body is provided with a plurality of protrusions to form an unsmooth surface of the inner wall of the pipeline.

CN 102909784 A discloses a method and a device for producing a prestressed concrete cylinder pipe by surfactant, and belongs to the technical field of the method and the device for producing the prestressed concrete cylinder pipe. An annular prestressed highstrength steel wire is wound on a cylindrical thin steel plate tube at the outer surface of a pipe core.

### SUMMARY OF THE DISCLOSURE

The invention is set out in the appended set of claims.

Additional aspects of the disclosure will be evident from the disclosure herein.

### BRIEF DESCRIPTION OF THE DRAWINGS

The accompanying drawings are included to provide a further understanding of the methods and devices of the disclosure, and are incorporated in and constitute a part of this specification. The drawings are not necessarily to scale, and sizes of various elements may be distorted for clarity. The drawings illustrate one or more embodiment(s) of the disclosure, and together with the description serve to explain the principles and operation of the disclosure.
FIG. 1 is a schematic side view of a loose fill insulation system according to an embodiment of the disclosure;
FIG. 2 is a schematic front view of the loose fill insulation system of FIG. 1;
FIG. 3 is a schematic cross-sectional side view of a portion the system of FIG. 1;
FIG. 4 is a schematic perspective cross-sectional end view of a connection module shown in the portion of the loose fill insulation hose of FIG. 3;
FIG. 5 is a schematic perspective view of a portion of the connection module of FIG. 4;
FIG. 6 is a schematic cross-sectional end view of a portion of the connection module of FIG. 4;
FIG. 7 is a schematic cross-sectional end view of a portion of a connection module according to another embodiment of the disclosure; and
FIG. 8 is a chart showing the density of delivered insulation using connection modules with varying numbers of protrusions.

### DETAILED DESCRIPTION

The present inventors have acknowledged that the internal geometries of loose fill insulation hoses can help open the loose fill insulation during installation, and improve the installation performance. Moreover, the inventors have identified that the internal geometry within one or more connectors attached to hose sections can provide such improved performance.

Accordingly, one aspect of the disclosure a connection module for a loose fill insulation hose. The connection module includes a tubular body extending along an axis and having an exterior side and an interior side that surrounds a path for conveying loose fill insulation. The connection module also includes a plurality of roughening structures coupled to the interior side of the tubular body so as to form a rough interior surface of the connection module. Each of the roughening structures includes at least one protrusion that extends transverse to the axis of the tubular body. The roughening structures form more than 400 protrusions that extend into the path of the loose fill insulation within the tubular body of the connection module.

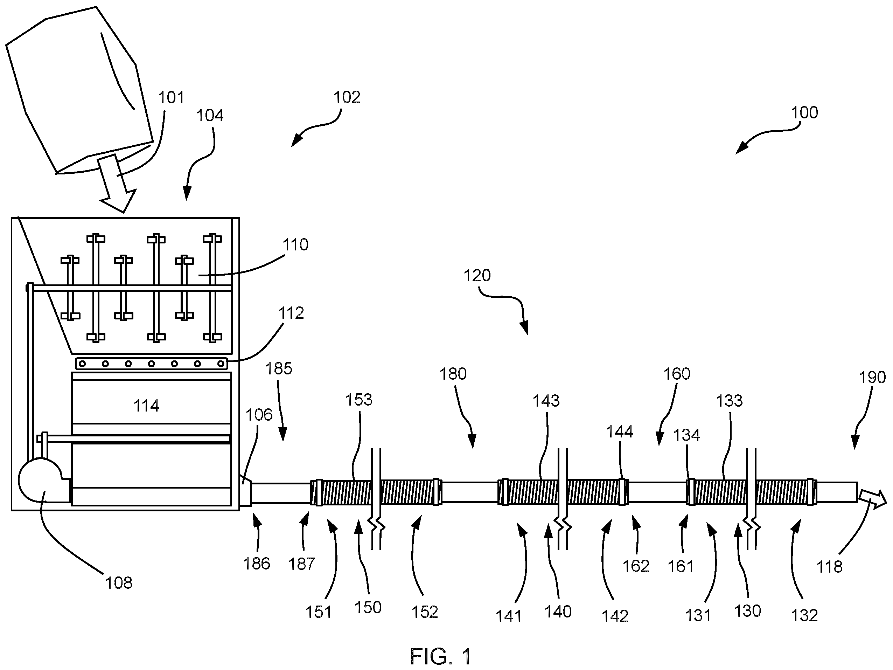

FIGS. 1A and 1B show a loose fill insulation system 100 including such a connection module 160. As explained in more detail below, the loose fill insulation system 100 includes a blowing machine 102 and a loose fill insulation hose 120 connected to the blowing machine 102. The connection module 160 is included in the loose fill insulation hose 120.

The connection module includes a tubular body extending along an axis and having an exterior side and an interior side that surrounds a path for conveying loose fill insulation. The connection module also includes a plurality of roughening structures coupled to the interior side of the tubular body so as to form a rough interior surface of the connection module. Each of the roughening structures includes at least one protrusion that extends transverse to the axis of the tubular body. The term "protrusion" as used herein refers to a structure that extends at least 1 mm from a supporting surface transverse to an axis of the tubular body and into the flow path. In some embodiments, the roughing structure includes a single protrusion and the tubular body forms the supporting surface. In other embodiments, the roughening structure includes a supporting body that forms the supporting surface and the roughening structure includes one or more protrusions that extend from the supporting body. The roughening structures form more than 400 protrusions that extend into the path of the loose fill insulation.

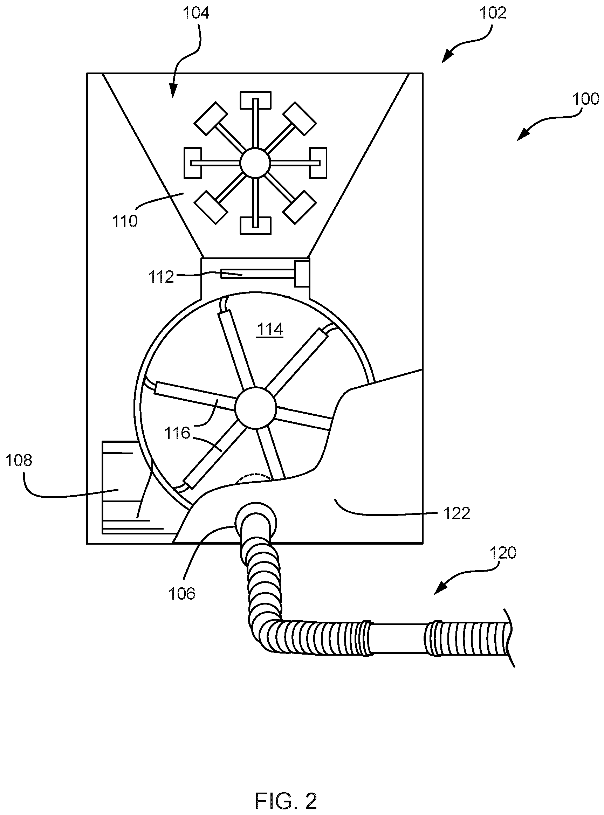

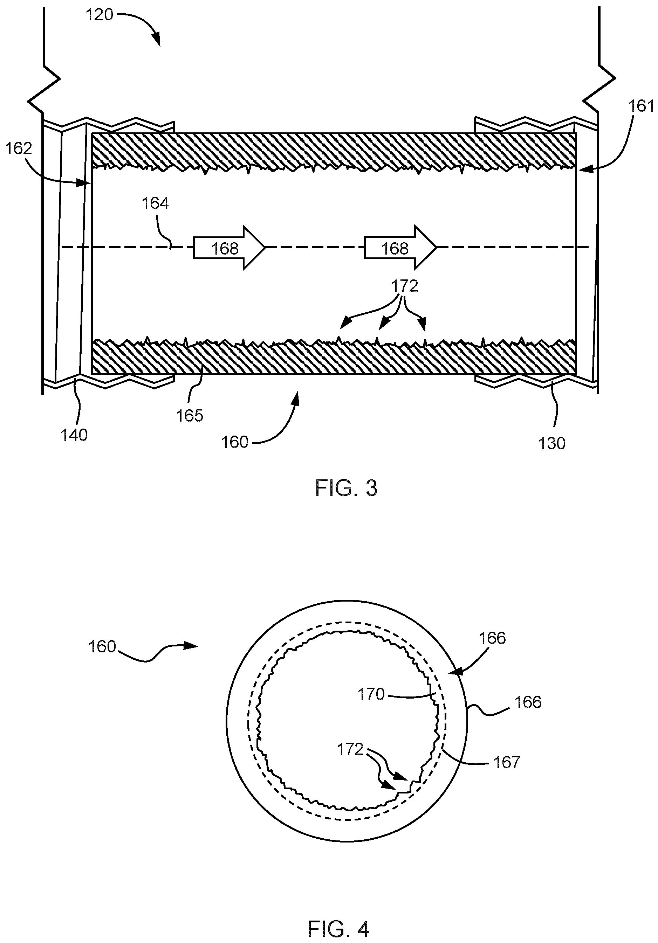

Such a connection module is shown in FIGS. 3-6. FIG. 3 illustrates a section of loose fill insulation hose 120 of FIGS. 1 and 2 that includes connection module 160 positioned between first hose section 130 and second hose section 140. As illustrated in FIG. 3, the connection module 160 has a straight tubular form and extends along an axis 164 from a first end 161 to a second end 162. The first end 161 of connection module 160 is coupled to first hose section 130 while the second end 162 is coupled to second hose section 140. The connection module 160 includes a tubular body 165 that is aligned with the axis 164 and includes a circumferential exterior side 166 and a circumferential interior side 167 that is represented by a dashed line in the cross-sectional depiction shown in FIG. 4.

The connection module 160 also includes a plurality of roughening structures, as described further below, which are coupled to the interior side 167 of the tubular body 165. The roughening structures form a rough interior surface 169 of connection module 160 that surrounds a path 168 for conveyed loose fill insulation moving through the loose fill insulation hose 120. Each of the roughening structures includes at least one protrusion 172 that extends transverse to the axis 164 of the tubular body 165 and into the path 168 for the conveyed loose fill insulation.

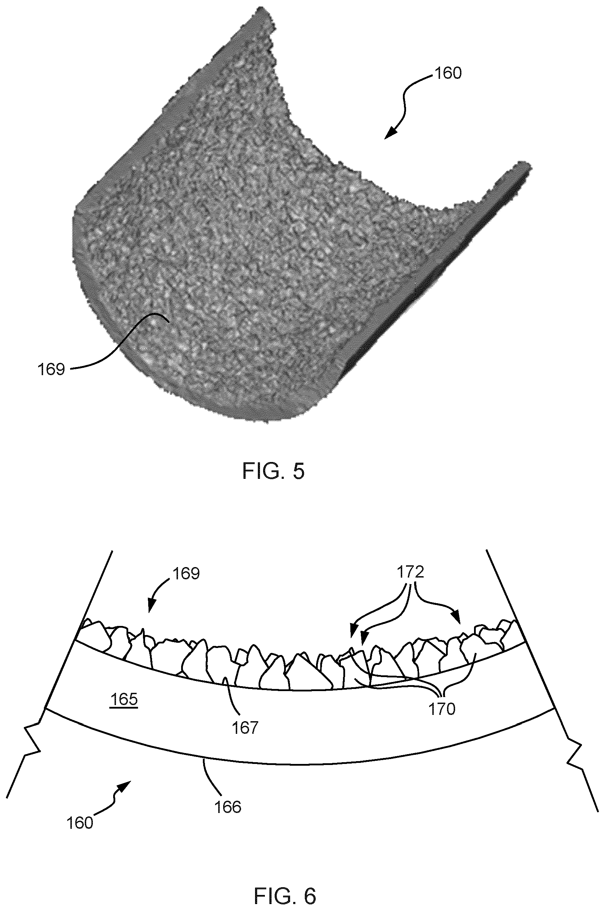

FIG. 5 shows a perspective view of a portion of connection module 160 that illustrates the rough interior surface 169 formed by the roughening structures formed around the inner circumference of connection module 160. FIG. 6 shows a detailed view of a portion of a cross section of connection module 160. As shown, the tubular body 165 has an exterior side 166 that extends around the circumference of connection module 160 and an interior side 167 that faces the path through which loose fill insulation is conveyed. A plurality of roughening structures 170 extend radially inward from interior side 167 of tubular body 165. Further, each of the roughening structures 170 forms at least one protrusion 172 that is adapted to help condition the loose fill insulation. In particular, the protrusions 172 of the roughening structures 170 are configured to open the loose fill insulation as it travels through connection module 160. As air flowing through the hose carries the loose fill insulation through connection module 160, fibers or particles of the loose fill insulation may catch on the projections roughening structures 170, particularly the protrusions 172, and be pulled open or apart.

In accordance with the disclosure, the connection module 160 includes a relatively large number of roughening structures so that the rough interior surface 169 has a high density of protrusions per surface area of the interior side 167 of the tubular body 165. As an example, in some embodiments, the roughening structures provide a density of protrusions of at least 1 protrusion per cm², e.g., at least 2 protrusions per cm², e.g., at least 3 protrusions per cm². As a result of the high density of protrusions, the connection may include a number of protrusions that is overwhelmingly larger than the number of protrusions provided by other loose fill insulation connection modules. For example, in some embodiments, the roughening structures form more than 800 protrusions that extend into the path of the loose fill insulation over the interior surface of the connection module.

The inventors have determined that the use of roughening structures that form a large number of protrusions on the interior surface of the connection module can lead to very efficient conditioning of loose fill insulation being conveyed through a hose containing the connection module. In particular, a connection module including such roughening structures can produce low densities of the installed loose fill insulation that are comparable to those which are produced using hoses with highly constricted openings. In comparison, by avoiding the use of a constricted opening, the sound during installation may be reduced and the flow of insulation during installation may be more easily controlled.

In certain embodiments of the connection module, the tubular body is formed of a first material and the roughening structures are formed of a second material. For example, in some embodiments, the tubular body is formed of a plastic material, such as PVC or ABS, while the roughening structures are formed of a second material, such as rock, ceramic, glass, or metal. Likewise, in some embodiments, the roughening structures are formed of a reinforced polymer material. Such a construction that uses different materials for the tubular body and roughening structures can reduce manufacturing costs, as roughening structures with complex shapes can be added on the interior surface of the connection module without the need to manufacture the tubular body to include such a large number of roughening structures. On the other hand, in some embodiments, the roughening structures may be integrally formed with the tubular body. For example, in some embodiments the roughening structures are provided on the tubular body by additive manufacturing, such as 3D printing. In other embodiments, a tubular shape is initially produced, and the roughening structures are machined on the interior side by removing some material of the tubular shape. In yet other embodiments, the tubular shape may be constructed in one or more sections or slices as viewed from the end on direction, and each section may be cast with roughened internal surface structures. Multiple sections can then be assembled to complete a fully enclosed tubular body.

The term "tubular" as used here for the tubular body will encompass conventional round hoses and pipes, but also can be used for other enclosed passageways for materials, including shapes that have flat sides or series of flat sides, and show shapes such as triangles, squares, rectangles, pentagons, hexagons, octagons and other multiplicities of sides. In addition, a tube can be round, oval, elliptical or contain a multiple of curvatures. A tube can also be a combination of flat and curved surfaces.

In certain embodiments of the connection module, the roughening structures are formed of a plurality of particles of the second material. For example, in some embodiments, the roughening structures are formed of individual grains of mineral particles, such as cullet, rock, garnet, aluminum oxide, sand, or other abrasive particles. In some embodiments, the particles are secured to the tubular body with an adhesive, such as a layer of epoxy that the particles are embedded in. In other embodiments, the particles are embedded directly into the tubular body, or mechanically coupled to the tubular body as explained further below. Further still, in some embodiments, the particles are attached to a carrier that is secured to the tubular body. For example, in some embodiments, the particles are secured to a flexible sheet, such as fabric or paper, that acts as a carrier and the flexible sheet is attached to the interior side of the tubular body.

In certain embodiments of the connection module, the particles have a rough surface. For example, in some embodiments, the particles may include a surface formed by a limited number of facets to yield sharp edges or points thereon. Such edges and points may be effective in catching and opening fibers of loose fill insulation. In some embodiments, the outer surface of the particles may be at least sub-angular. For example, in some embodiments, the particles have an average roundness index of no more than 0.35. The term roundness index, as used herein, refers to the roundness index described in Waddell, H., "Volume, Shape, and Roundness of Rock Particles," Journal of Geology 40:443-51 (1932) and Waddell H. "Sphericity and Roundness of Rock Particles" Journal of Geology 41:310-331 (1933), each of which is hereby incorporated herein by reference in its entirety. The roundness index can be measured using the estimates described in Krumbein, W. C., "Measurement and Geological Significance of Shape and Roundness of Sedimentary Particles." Journal of Sedimentary Petrology 11:64-72 (1941), which is hereby incorporated herein by reference in its entirety. Particles having a roundness index below 0.35 will have a higher concentration of sharp points and edges for snagging loose fill insulation fibers.

In certain embodiments of the connection module, each roughening structure extends radially inward from the interior side of the tubular body to a single point that forms a respective protrusion. For example, in some embodiments, the roughening structure forms a protrusion with respect to both the longitudinal and circumferential direction of the connection module. Such a protrusion is distinct from a ridge that extends around a portion of the circumference of the connection module or that extends along a portion of the length of the connection module.

In certain embodiments of the connection module, the shapes of the roughening structures differ. For example, in embodiments where the roughening structures are made of particles of bulk material, such as cullet or rock, the roughening structures may have random or varying shapes caused by breaking or crushing of the base material. The differing shapes of the roughening structures may help catch fibers of loose fill insulation as it is conveyed through the connection module. In other embodiments, the roughening structures have the same shape. For example, in some embodiments, each of the roughening structures is a manufactured piece, and all the roughening structures are the same. Of course, in some embodiments, the roughening structures may be made of manufactured pieces having different shapes.

In certain embodiments of the connection module, the spacing between the protrusions of adjacent roughening structures varies over the interior surface. For example, in some embodiments, the roughening structures are imprecisely scattered over the interior surface of the connection module. For instance, where the roughening structures are particles adhered to an epoxy, the roughening structures may be deposited on the epoxy in bulk such that the distance between protrusions is randomized within a range that is based on the size of the particles.

In certain embodiments of the connection module, the height of the protrusions of the roughening structures are in a range of 1% to 5% of an inner diameter of the connection module. The height of each protrusion, as described herein, refers to the difference in the distance between the protrusion and the central axis of the connection module and the distance between outermost point of the interior surface and the central axis. Further, the inner diameter of the connection module may be calculated as twice the distance between the outermost point of the interior surface and the central axis.

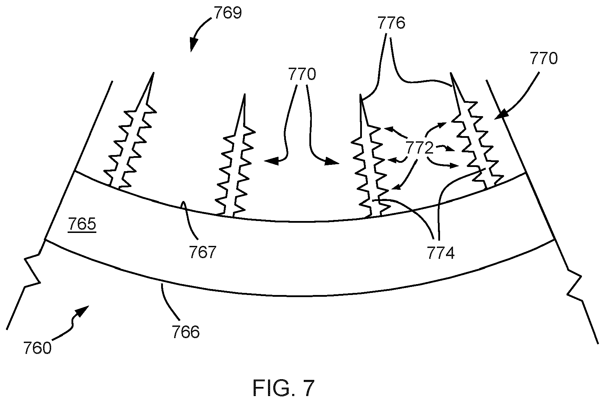

In certain embodiments of the connection module, the roughening structures include shafts that extend inward from the tubular body. Such an embodiment is shown in FIG. 7, which illustrates a portion of a cross section of a connection module 760. The connection module 760 includes a tubular body 765 having an exterior side 766 and an interior side 767. A plurality of roughening structures 770 provide the connection module 760 with a rough interior surface 769. Each of the roughening structures 770 includes a shaft 774 and a plurality of protrusions 772 that extend transverse to an axis of the connection module 760 and into the path along which loose fill insulation is conveyed.

In certain embodiments of the connection module, the ends of the shafts form at least some of the protrusions. For example, each of the points 776 at the end of each shaft 774 in connection module 760 forms a separate protrusion.

Furthermore, in certain embodiments of the connection module, the roughening structures include projections that extend laterally outward from the shafts, and the projections form at least some of the protrusions. For example, as shown in FIG. 7, each of the roughening structures 770 includes a plurality of projections 772 that extend laterally outward from the respective shaft 774. While the shafts 774 extend in the radial direction of the connection module 760, these projections 772 substantially extend in the circumferential direction of the connection module 760 and are transverse to the axis of the connection module 760. Accordingly, each of the projections 772 extends into the path of loose fill insulation and provides a surface for catching the loose fill insulation.

In certain embodiments of the connection module, the projections are formed by threads that encircle the shaft. For example, the roughening structures 770 of connection module 760 are formed by screws that extend through the tubular body 765. The projections 772 that form many of the protrusions of the rough interior surface 769 are formed by the threads of the screws. Although the threads extend continuously around the shafts of the roughening structures 770 on a helical path, each thread forms several protrusions, because the thread extends laterally from the shaft and into the flow path of the loose fill insulation at each half turn around the shaft.

In certain embodiments of the connection module as otherwise described herein, the diameter of the interior surface of the connection module is at least 40 mm, e.g., at least 50 mm, e.g., at least 60 mm. In some embodiments, the diameter of the interior surface of the first connection module is no more than 200 mm, e.g., no more than 150 mm, e.g., no more than 100 mm. For example, in some embodiments, the diameter of the interior surface of the first connection module is in a range from 40 mm to 200 mm, e.g., from 50 mm to 150 mm, e.g., from 60 mm to 100 mm.

In certain embodiments of the connection module as otherwise described herein, the length of the connection module is at least 15 cm, e.g., at least 20 cm, e.g., at least 25 cm, at least 30 cm, e.g., at least 35 cm, e.g., at least 40 cm. In some embodiments, the length of the connection module is no more than 100 cm, e.g., no more than 80 cm, e.g., no more than 60 cm. For example, in some embodiments, the length of the connection module is in a range from 30 cm to 100 cm, e.g., from 35 cm to 80 cm, e.g., from 40 cm to 60 cm.

In certain embodiments of the connection module as otherwise described herein, the roughening structures of the connection module vary in size. For example, in some embodiments, the roughening structures extend to varying depths from the interior side of the tubular body into the flow path. Likewise, in some embodiments, the roughening structures vary in all dimensions, while in other embodiments, the roughening structures have some consistent dimensions and some varying dimensions.

In another aspect, the disclosure provides a loose fill insulation hose including a plurality of tubular sections coupled together so as to form a conduit configured to convey loose fill insulation along a path from a blowing machine to an installation site. The tubular sections include a first hose section extending from a proximal end to a distal end. The first hose section includes a flexible body that surrounds the path. The loose fill insulation hose also includes first a connection module according to the disclosure coupled to the first hose section.

Such a loose fill insulation hose is schematically shown in FIGS. 1 and 2 as part of loose fill insulation system 100. Loose fill insulation hose 120 includes several tubular sections coupled together to form a conduit for conveying loose fill insulation along a path from a blowing machine to an installation site. As used herein, the term coupled is not limited to direct connections between elements. Rather, two tubular sections may be coupled to one another indirectly by other sections such that both tubular sections form part of the same path for loose fill insulation. As shown in FIGS. 1 and 2, loose fill insulation hose 120 includes a first hose section 130, a second hose section 140, and a third hose section 150 that are arranged in a sequence from a distal end of loose fill insulation hose 120 to a proximal end that attaches to the blowing machine 102. First hose section 130 includes a flexible body 133 that extends from a proximal end 131 to a distal end 132. Similarly, second hose section 140 includes a flexible body 143 that extends from a proximal end 141 to a distal end 142, and third hose section 150 includes a flexible body 153 that extends from a proximal end 151 to a distal end 152.

Loose fill insulation hose 120 also includes several connection modules, such as connection module 160 between first hose section 130 and second hose section 140, and connection module 180 between second hose section 140 and third hose section 150.

In the embodiment of loose fill insulation hose 120, as shown in FIG. 1, the hose sections are attached to the connection modules using clamps. For example, first hose section 130 is coupled to connection module 160 using a clamp 134 that surrounds first hose section 130 and fastens the first hose section 130 to the connection module 160. Similarly, second hose section 140 is coupled to the opposite side of connection module 160 using another clamp 144. On the other hand, in some embodiments, the hose sections include end fittings that are configured to attach to the connection modules. Other methods of securing the hose sections to the connection modules are also possible.

The connection module of the disclosure may be positioned at various locations along the loose fill insulation hose. For example, in loose fill insulation hose 120, as shown in FIGS. 1 and 2, the connection module 160 is between first hose section 130 and second hose section 140 near the distal end of hose 120. In other embodiments, the connection module of the disclosure may be positioned between other pairs of hose sections along the length of the hose. Further, in some embodiments, several connection modules of the loose fill insulation hose may be configured in accordance with the connection module of the disclosure. In some embodiments, the connection module may be at a proximal or distal end of the hose assembly 120, as well as in those positions in conjunction with placement between one or more hose sections.

In certain embodiments of the loose fill insulation hose as otherwise described herein, the loose fill insulation hose further comprises a proximal connection module including a first side configured to attach to an outlet of a loose fill insulation blowing machine and a second side attached to the proximal end of the first hose section. For example, loose fill insulation hose 120, shown in FIGS. 1 and 2, includes a proximal connection module 185 that has a first side 186 and a second side 187. The second side 187 of the proximal connection module 185 is attached to the proximal end 151 of third hose section 150 while the first side 186 of proximal connection module 185 is attached to an outlet 106 of loose fill insulation blowing machine 102. Accordingly, proximal connection module 185 is at the proximal end of loose fill insulation hose 120 and receives the loose fill insulation as it leaves blowing machine 102. In some embodiments, the proximal connection module may include roughening structures, as described above. Accordingly, loose fill insulation passing through the proximal connection module may be conditioned toward the beginning of the hose.

Alternatively, in other embodiments, the loose fill insulation hose includes a proximal connection module and a coupler configured to attach to an outlet of the loose fill insulation blowing machine. In such an embodiment, a first side of the proximal connection module is attached to the coupler and a second side of the proximal connection module is attached to the proximal end of a hose section. In some embodiments, the coupler is used to enable the connection between the loose fill insulation hose and the outlet of the blowing machine. For example, in some embodiments, the coupler has two female couplings to receive male couplings on the blowing machine outlet and proximal connection module. In other embodiments, the coupler has two male couplings. In still yet other embodiments the coupler may contain one male and one female coupling on opposite ends. Further, in some embodiments, the coupling changes the diameter of the opening so that a hose and blowing machine outlet of different diameters can be connected.

In other embodiments the loose fill insulation hose does not include a proximal connection module. For example, in some embodiments, one of the hose sections is either directly attached to the blowing machine outlet or is attached to the blowing machine outlet using a coupler.

In certain embodiments of the loose fill insulation hose as otherwise described herein, the first hose section is one of a group of hose sections that are connected in series, and the loose fill insulation hose further comprises a distal connection module attached at a distal end of the hose. For example, loose fill insulation hose 120 shown in FIG. 1 includes a group of hose sections that includes first hose section 130, second hose section 140 and third hose section 150 connected in series. In other embodiments, the hose may include more than three hose sections, such as 4, 5, or more hose sections connected in series. At the distal end of loose fill insulation hose 120 is a distal connection module 190. In some embodiments, the distal connection module may include roughening structures, as described above. Accordingly, loose fill insulation passing through the distal connection module may be conditioned toward the end of the hose.

In some embodiments, the loose fill connection hose may include an outlet nozzle attached to the distal connection module. Still, in other embodiments, the loose fill insulation module may exclude a distal connection module. For example, in some embodiments, an outlet nozzle is connected directly to a hose section. Further, in other embodiments, the end of the hose is formed by a hose section, and neither a connection module nor an outlet nozzle is included at the end.

In certain embodiments of the loose fill insulation hose as otherwise described herein, the first hose section includes projections that extend inward into the path. Such hose configurations are described, for example, in U.S. Patent No. 7 284 573. In some embodiments, the projections of the first hose section extend into the path by a first radial depth and at least some of the roughening structure of the first connection module extend into the path by a second radial depth that is at least 3 times larger than the first radial depth, e.g., at least 5 times larger.

In certain embodiments of the loose fill insulation hose as otherwise described herein, the first side of the first connection module is a male fitting that is inserted into the distal end of the first hose section, and the second side of the first connection module is a male fitting that is inserted into the proximal end of a second hose section. For example, as shown in FIG. 1, each of the first side 161 and second side 162 of first connection module 160 are formed as a male fitting that is inserted into the first hose section 130 and second hose section 140, respectively. In other embodiments, the first connection module includes female fittings and the hose sections include male fittings that are inserted into the connection module. Further, in some embodiments, the first connection module includes a male fitting on one side and a female fitting on the other side. Such a configuration allows connection between two adjacent connection modules without an intervening hose section or coupler.

In certain embodiments of the loose fill insulation hose as otherwise described herein, the first hose section is corrugated. For example, first hose section 130 of loose fill insulation hose 120, as shown in FIGS. 1-3, has a corrugated tubular body 133. Corrugated hose can have increased flexibility and strength compared to similar hose with a smooth outer surface. The other hose sections of loose fill insulation hose 120 are similarly corrugated, as shown in FIGS. 1 and 2. In other embodiments, the hose section may have a different profile, such as smooth.

In certain embodiments of the loose fill insulation hose as otherwise described herein, the first hose section has a length of at least 10 feet, e.g., at least 15 feet, e.g., at least 20 feet. In some embodiments, the first hose section has a length of no more than 100 feet, e.g., no more than 80 feet, e.g., no more than 60 feet, e.g., about 50 feet. For example, in some embodiments, the first hose section has a length in a range from 10 feet to 100 feet, e.g., from 12 feet to 80 feet, e.g., from 15 feet to 60 feet, e.g., from 20 feet to 50 feet. In some embodiments each of the hose sections has the same length. In other embodiments the hose sections of the loose fill insulation hose have different lengths.

In certain embodiments of the loose fill insulation hose as otherwise described herein, an inner diameter of the first hose section is at least 1.5 inches, e.g., at least 2 inches, e.g., at least 2.5 inches. In certain embodiments of the loose fill insulation hose as otherwise described herein, an inner diameter of the first hose section is no more than 8 inches, e.g., no more than 6 inches, e.g., no more than 4 inches. For example, in some embodiments, the inner diameter of the first hose section is in a range from 1.5 inches to 8 inches, e.g. from 2 inches to 6 inches, e.g., from 2.5 inches to 4 inches. Further, in some embodiments each of the hose sections has the same inner diameter. In other embodiments, some of the hose sections have different inner diameters.

In another aspect, the disclosure provides a system for delivering loose fill insulation that includes a loose fill insulation blowing machine and the loose fill insulation hose of the disclosure. The blowing machine includes a hopper configured to receive loose fill insulation, an outlet, and a blower operable to expel loose fill insulation through the outlet. The loose fill insulation hose is attached to the outlet of the loose fill insulation blowing machine.

Such a system is schematically shown in FIGS. 1 and 2. Loose fill insulation system 100 includes a blowing machine coupled to loose fill insulation hose 120, which is described in detail above. Loose fill insulation blowing machine 102 includes a hopper 104 configured to receive insulation. Blowing machine 102 conditions the insulation, which is then delivered to hose 120 through outlet 106 through the use of a blower 108. The blower 108 circulates air through blowing machine 102 to carry the loose fill insulation through hose 120 to an installation site at the distal end of the hose.

In certain embodiments of the system of the disclosure, the hopper includes a shredder box configured to break apart the loose fill insulation. For example, hopper 104 includes a shredder box 110 including a plurality of shredding members that rotate through the packed insulation to break the insulation apart and "open" the insulation.

In certain embodiments of the system of the disclosure, the loose fill insulation blowing machine includes an air lock configured to transfer the loose fill insulation to the outlet. For example, the insulation in system 100 moves from the shredder box 110 through a stator bar 112 that includes tines for further opening the insulation and into an air lock 114. As shown in FIG. 2, the air lock 114 includes a plurality of sealed vanes 116 that rotate around a drum and transport the insulation to an area where the air flow from blower 108 carries the insulation through outlet 106. The air lock 114 directs the air flow out through the outlet 106 rather than back into the shredder box 110.

In another aspect, the disclosure provides a method of delivering loose fill insulation to an installation site using the system of the disclosure. The method includes expelling loose fill insulation from a blowing machine into the loose fill insulation hose. The loose fill insulation is conveyed through the loose fill insulation hose to the installation site.

Such a method is depicted in FIG. 1. Packed insulation 101 is initially introduced into blowing machine 102 via the hopper 104. The packed insulation 101 is broken up and opened by the shredder box 110 and stator bar 112 as it moves into air lock 114. The air lock 114 then moves the insulation to a position where air from blower 108 can carry the insulation through hose 120 to an installation site at the distal end of hose 120, where the loose fill insulation 118 is delivered to the installation site.

In certain embodiments of the method as otherwise described herein, the method further includes opening the loose fill insulation that is passing through the first connection module using roughening structures extending inward into the path between the first hose section and the second hose section. For example, as the loose fill insulation in system 100 passes through first connection module 160, the roughening structures 168 interact with the insulation and further open the insulation, as explained in more detail above.

In certain embodiments of the method as otherwise described herein, the delivered loose fill insulation has reduced density of at least 5%, e.g., at least 8%, e.g., at least 10%, compared to an unmodified system using the same blowing machine and operating parameters with an unmodified hose. The unmodified hose includes the same hose sections as the loose fill insulation hose and are coupled with connection modules having a smooth interior surface of constant diameter and an interior diameter that is the same as the interior side of the tubular body of the connection module.

In certain embodiments of the method as otherwise described herein, the loose fill insulation includes a fibrous material. For example, in some embodiments, the loose fill insulation includes fiberglass fibers, cellulose fibers, stonewool fibers, plastic fibers, natural wool fibers, natural cotton fibers, or another type of fiber. In other embodiments, the loose fill insulation includes small insulating components, such as a foam bead insulation or a plastic particle insulation.

### EXAMPLE

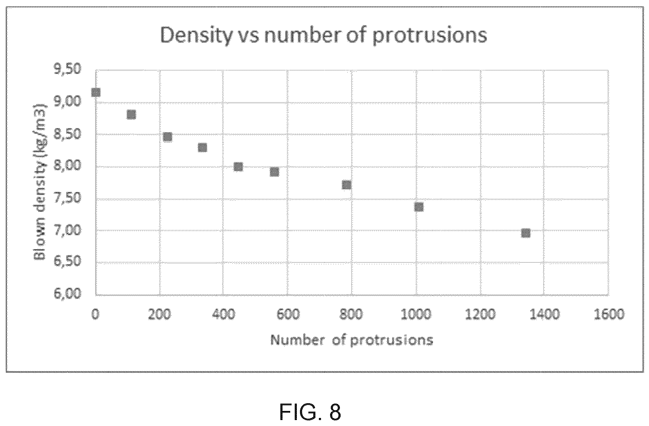

FIG. 8 illustrates the density of insulation that was blown in various tests using connection modules having different numbers of protrusion. In each test the insulation was blown using an Iso 400 blowing machine from Isol France (Conflans-Sainte-Honorine, France) at an airflow of 450 m3/h with a machine rotation speed of 10 rpm. The insulation was blown through two sections of smooth hose each having a length of 20m and a diameter of 80mm ("Couronne tuyau semi rigide Ø80") from Isol International (Conflans-Sainte-Honorine, France). The hose sections were connected by a 20 cm length section of pvc pipe with a 76mm diameter. In each test, an 18 kg bag of Isolene + from Saint-Gobain Isover France (Courbevoie, France) was blown into an open box having an area of 2 meters by 1 meter. The connections modules of the various tests were included at the end of the hose. The connection modules were 3D printed from PLA and had an inner diameter of 76 mm and an outer diameter of 80 mm.

The variation in the number of protrusions in the connection modules was obtained by varying the overall length of the connection module while maintaining the same density in the number of protrusions per internal surface area. Each of the protrusions was formed as a single point, similar to a nail, and had an average length into the flow path of 6.6 mm. The protrusions were arranged in rows along the length of the connection module that were evenly spaced by 10mm. Each of the rows included 28 protrusions evenly spaced around the circumference of the connection module. The position of every other row of protrusions was rotated slightly about the circumference of the connection module, so that the protrusions of one row were positioned halfway between two protrusions of a neighboring row with respect to the circumference of the connection module. The tests that used connection modules with a greater number of protrusions included additional rows and a corresponding increase in length, but were otherwise the same.

Once the entire insulation bag was blown into the contained area, the density of the blown insulation was determined by measuring the height and measuring mass of the blown insulation. As can be seen, as the number of protrusion in the connection module increased, the density of the delivered insulation was reduced. Moreover, when the connection module include at least 400 protrusions, the reduction in density was at least 10 percent.

It will be apparent to those skilled in the art that various modifications and variations can be made to the processes and devices described here without departing from the scope of the disclosure. Thus, it is intended that the present disclosure cover such modifications and variations of this invention provided they come within the scope of the appended claims.

## Claims

1. A system for delivering loose fill insulation, the system comprising:
a loose fill insulation blowing machine (102) comprising:
a hopper (104) configured to receive loose fill insulation,
an outlet (106), and
a blower (108) operable to expel loose fill insulation through the outlet (106); and
a loose fill insulation hose (120) comprising a plurality of tubular sections coupled together so as to form a conduit configured to convey loose fill insulation along a path from a blowing machine (102) to an installation site, the tubular sections comprising:
a first hose section (130) extending from a proximal end (131) to a distal end (132), the first hose section (130) including a flexible body (133) that surrounds the path; and
a first connection module (160) coupled to the first hose section (130), the first connection module (160) comprising:
a tubular body (165) extending along an axis, the tubular body (165) including an exterior side (166) and an interior side (167) that surrounds a path for conveying loose fill insulation;
a plurality of roughening structures (170) coupled to the interior side (167) of the tubular body (165) so as to form a rough interior surface of the connection module (160), each of the roughening structures (170) including at least one protrusion (172) that extends transverse to the axis of the tubular body (160), wherein the roughening structures (170) form more than 400 protrusions that extend into the path of the loose fill insulation.

2. The system according to claim 1, wherein the roughening structures (170) form more than 800 protrusions, e.g., more than 1200 protrusions, e.g., more than 2000 protrusions, e.g., more than 5000 protrusions.

3. The system according to claim 1 or claim 2, wherein the protrusions have a density of at least 1 protrusion per cm², e.g., at least 2 protrusions per cm².

4. The system according to any of claims 1 to 3, wherein the tubular body (165) is formed of a first material and the roughening structures (170) are formed of a second material.

5. The system according to claim 4, wherein the roughening structures (170) are formed of a plurality of particles of the second material.

6. The system according to claim 5, wherein the particles have a rough surface.

7. The system according to claim 5 or claim 6, wherein the second material includes mineral particles.

8. The system according to any of claims 5 to 7, wherein the particles are attached to a carrier that is secured to the tubular body (165).

9. The system according to any of claims 1 to 4, wherein the roughening structures (170) include shafts (774) that extend inward from the tubular body (170).

10. The system according to claim 9, wherein the roughening structures (170) include projections (772) that extend laterally outward from the shafts (774), and wherein the projections (772) form at least some of the protrusions.

11. The system according to claim 10, wherein the projections are formed by threads that encircle the shaft.

12. The system according to any of claims 1 to 11, wherein the first connection module (160) is attached to the distal end of the first hose section (130), between the first hose section (130) and a second hose section (140).

13. The system according to any of claims 1 to 11, wherein the first connection module (160) is attached to the distal end of the first hose section (130), and is disposed at a distal end of the hose.

14. A method of delivering loose fill insulation to an installation site using the system according to any of claims 1 to 13, the method comprising:
expelling loose fill insulation from a blowing machine (102) into the loose fill insulation hose (120); and
conveying the loose fill insulation through the loose fill insulation hose (120) to the installation site.

15. A method of delivering loose fill insulation to an installation site using the system according to any of claims 1 to 13, the method comprising:
expelling loose fill insulation from a blowing machine (102) into the loose fill insulation hose (120); and
conveying the loose fill insulation through the loose fill insulation hose (120) to the installation site,
wherein the delivered loose fill insulation has reduced density of at least 5%, e.g., at least 8%, e.g., at least 10%, compared to an unmodified system using the same blowing machine and operating parameters with an unmodified hose,
wherein the unmodified hose includes the same hose sections as the loose fill insulation hose that are coupled with connection modules having a smooth interior surface of constant diameter and an interior diameter that is the same as the major surface portion of the first interior surface of the first connection section.

## Patentansprüche

1. Ein System zum Liefern von Einblasdämmung, wobei das System Folgendes beinhaltet:
eine Einblasmaschine (102) für Einblasdämmung, die Folgendes beinhaltet:
einen Trichter (104), der dazu konfiguriert ist, Einblasdämmung aufzunehmen,
einen Auslass (106), und
ein Gebläse (108), das dazu betrieben werden kann, Einblasdämmung durch den Auslass (106) auszustoßen; und
einen Schlauch (120) für Einblasdämmung, der eine Vielzahl von röhrenförmigen Abschnitten beinhaltet, die miteinander gekoppelt sind, um eine Leitung zu bilden, die dazu konfiguriert ist, Einblasdämmung entlang eines Pfades von einer Einblasmaschine (102) zu einem Installationsort zu befördern, wobei die röhrenförmigen Abschnitte Folgendes beinhalten:
einen ersten Schlauchabschnitt (130), der sich von einem proximalen Ende (131) zu einem distalen Ende (132) erstreckt, wobei der erste Schlauchabschnitt (130) einen flexiblen Körper (133) umfasst, der den Pfad umgibt; und
ein erstes Verbindungsmodul (160), das mit dem ersten Schlauchabschnitt (130) gekoppelt ist, wobei das erste Verbindungsmodul (160) Folgendes beinhaltet:
einen röhrenförmigen Körper (165), der sich entlang einer Achse erstreckt, wobei der röhrenförmige Körper (165) eine Außenseite (166) und eine Innenseite (167) umfasst, die einen Pfad zum Befördern von Einblasdämmung umgibt;
eine Vielzahl von Aufrauungsstrukturen (170), die mit der Innenseite (167) des röhrenförmigen Körpers (165) gekoppelt sind, um eine raue Innenfläche des Verbindungsmoduls (160) zu bilden, wobei jede der Aufrauungsstrukturen (170) mindestens eine Erhebung (172) umfasst, die sich quer zur Achse des röhrenförmigen Körpers (160) erstreckt, wobei die Aufrauungsstrukturen (170) mehr als 400 Erhebungen bilden, die sich in den Pfad der Einblasdämmung erstrecken.

2. System gemäß Anspruch 1, wobei die Aufrauungsstrukturen (170) mehr als 800 Erhebungen, z. B. mehr als 1200 Erhebungen, z. B. mehr als 2000 Erhebungen, z. B. mehr als 5000 Erhebungen, bilden.

3. System gemäß Anspruch 1 oder Anspruch 2, wobei die Erhebungen eine Dichte von mindestens 1 Erhebung pro cm², z. B. mindestens 2 Erhebungen pro cm², aufweisen.

4. System gemäß einem der Ansprüche 1 bis 3, wobei der röhrenförmige Körper (165) aus einem ersten Material gebildet ist und die Aufrauungsstrukturen (170) aus einem zweiten Material gebildet sind.

5. System gemäß Anspruch 4, wobei die Aufrauungsstrukturen (170) aus einer Vielzahl von Partikeln des zweiten Materials gebildet sind.

6. System gemäß Anspruch 5, wobei die Partikel eine raue Oberfläche haben(/aufweisen).

7. System gemäß Anspruch 5 oder Anspruch 6, wobei das zweite Material mineralische Partikel umfasst.

8. System gemäß einem der Ansprüche 5 bis 7, wobei die Partikel an einem Träger befestigt sind, der an dem röhrenförmigen Körper (165) gesichert ist.

9. System gemäß einem der Ansprüche 1 bis 4, wobei die Aufrauungsstrukturen (170) Wellen (774) umfassen, die sich von dem röhrenförmigen Körper (170) nach innen erstrecken.

10. System gemäß Anspruch 9, wobei die Aufrauungsstrukturen (170) Vorsprünge (772) umfassen, die sich von den Wellen (774) lateral nach außen erstrecken, und wobei die Vorsprünge (772) zumindest einige der Erhebungen bilden.

11. System gemäß Anspruch 10, wobei die Vorsprünge durch Gewinde gebildet sind, die die Welle umschließen.

12. System gemäß einem der Ansprüche 1 bis 11, wobei das erste Verbindungsmodul (160) an dem distalen Ende des ersten Schlauchabschnitts (130) zwischen dem ersten Schlauchabschnitt (130) und einem zweiten Schlauchabschnitt (140) befestigt ist.

13. System gemäß einem der Ansprüche 1 bis 11, wobei das erste Verbindungsmodul (160) an dem distalen Ende des ersten Schlauchabschnitts (130) befestigt ist und an einem distalen Ende des Schlauchs angeordnet ist.

14. Ein Verfahren zum Liefern von Einblasdämmung an einen Installationsort unter Verwendung des Systems gemäß einem der Ansprüche 1 bis 13, wobei das Verfahren Folgendes beinhaltet:
Ausstoßen von Einblasdämmung aus einer Einblasmaschine (102) in den Schlauch (120) für Einblasdämmung; und
Befördern der Einblasdämmung durch den Schlauch (120) für Einblasdämmung zu dem Installationsort.

15. Ein Verfahren zum Liefern von Einblasdämmung an einen Installationsort unter Verwendung des Systems gemäß einem der Ansprüche 1 bis 13, wobei das Verfahren Folgendes beinhaltet:
Ausstoßen von Einblasdämmung aus einer Einblasmaschine (102) in den Schlauch (120) für Einblasdämmung; und
Befördern der Einblasdämmung durch den Schlauch (120) für Einblasdämmung zu dem Installationsort,
wobei die gelieferte Einblasdämmung eine um mindestens 5 %, z. B. mindestens 8 %, z. B. mindestens 10 %, verringerte Dichte im Vergleich zu einem nicht modifizierten System aufweist, bei dem dieselbe Einblasmaschine und dieselben Betriebsparameter mit einem nicht modifizierten Schlauch verwendet werden,
wobei der nicht modifizierte Schlauch die gleichen Schlauchabschnitte wie der Schlauch für Einblasdämmung umfasst, die mit Verbindungsmodulen gekoppelt sind, die eine glatte Innenfläche mit konstantem Durchmesser und einen Innendurchmesser aufweisen, der gleich dem Hauptflächenteil der ersten Innenfläche des ersten Verbindungsabschnitts ist.

## Revendications

1. Un système destiné à délivrer de l'isolant en vrac, le système comprenant :
une machine de soufflage d'isolant en vrac (102) comprenant :
une trémie (104) configurée pour recevoir de l'isolant en vrac,
une sortie (106), et
une soufflante (108) utilisable pour expulser de l'isolant en vrac à travers la sortie (106) ; et
un tuyau d'isolant en vrac (120) comprenant une pluralité de sections tubulaires couplées ensemble de façon à former un conduit configuré pour acheminer de l'isolant en vrac le long d'un chemin depuis une machine de soufflage (102) jusqu'à un site d'installation, les sections tubulaires comprenant :
une première section de tuyau (130) s'étendant depuis une extrémité proximale (131) jusqu'à une extrémité distale (132), la première section de tuyau (130) incluant un corps flexible (133) qui entoure le chemin ; et
un premier module de raccordement (160) couplé à la première section de tuyau (130),
le premier module de raccordement (160) comprenant :
un corps tubulaire (165) s'étendant le long d'un axe, le corps tubulaire (165) incluant un côté extérieur (166) et un côté intérieur (167) et entourant un chemin pour l'acheminement de l'isolant en vrac ;
une pluralité de structures à rugosités (170) couplées au côté intérieur (167) du corps tubulaire (165) de façon à former une surface intérieure rugueuse du module de raccordement (160), chacune des structures à rugosités (170) incluant au moins une saillie (172) qui s'étend transversalement à l'axe du corps tubulaire (160), où les structures à rugosités (170) forment plus de 400 saillies qui s'étendent jusque dans le chemin de l'isolant en vrac.

2. Le système selon la revendication 1, où les structures à rugosités (170) forment plus de 800 saillies, par exemple, plus de 1200 saillies, par exemple, plus de 2000 saillies, par exemple, plus de 5000 saillies.

3. Le système selon la revendication 1 ou la revendication 2, où les saillies présentent une densité d'au moins 1 saillie par cm², par exemple, d'au moins 2 saillies par cm².

4. Le système selon n'importe lesquelles des revendications 1 à 3, où le corps tubulaire (165) est formé en un premier matériau et les structures à rugosités (170) sont formées en un deuxième matériau.

5. Le système selon la revendication 4, où les structures à rugosités (170) sont formées en une pluralité de particules du deuxième matériau.

6. Le système selon la revendication 5, où les particules présentent une surface rugueuse.

7. Le système selon la revendication 5 ou la revendication 6, où le deuxième matériau inclut des particules minérales.

8. Le système selon n'importe lesquelles des revendications 5 à 7, où les particules sont attachées à un support qui est assujetti au corps tubulaire (165).

9. Le système selon n'importe lesquelles des revendications 1 à 4, où les structures à rugosités (170) incluent des arbres (774) qui s'étendent vers l'intérieur depuis le corps tubulaire (170).

10. Le système selon la revendication 9, où les structures à rugosités (170) incluent des protubérances (772) qui s'étendent latéralement vers l'extérieur depuis les arbres (774), et où les protubérances (772) forment au moins quelques-unes des saillies.

11. Le système selon la revendication 10, où les protubérances sont formées par des filets qui encerclent l'arbre.

12. Le système selon n'importe lesquelles des revendications 1 à 11, où le premier module de raccordement (160) est attaché à l'extrémité distale de la première section de tuyau (130), entre la première section de tuyau (130) et une deuxième section de tuyau (140).

13. Le système selon n'importe lesquelles des revendications 1 à 11, où le premier module de raccordement (160) est attaché à l'extrémité distale de la première section de tuyau (130), et est disposé au niveau d'une extrémité distale du tuyau.

14. Un procédé destiné à délivrer de l'isolant en vrac jusqu'à un site d'installation à l'aide du système selon n'importe lesquelles des revendications 1 à 13, le procédé comprenant le fait :
d'expulser de l'isolant en vrac depuis une machine de soufflage (102) jusque dans le tuyau d'isolant en vrac (120) ; et
d'acheminer l'isolant en vrac à travers le tuyau d'isolant en vrac (120) jusqu'au site d'installation.

15. Un procédé destiné à délivrer de l'isolant en vrac jusqu'à un site d'installation à l'aide du système selon n'importe lesquelles des revendications 1 à 13, le procédé comprenant le fait :
d'expulser de l'isolant en vrac depuis une machine de soufflage (102) jusque dans le tuyau d'isolant en vrac (120) ; et
d'acheminer l'isolant en vrac à travers le tuyau d'isolant en vrac (120) jusqu'au site d'installation,
où l'isolant en vrac délivré présente une densité réduite d'au moins 5 %, par exemple, d'au moins 8 %, par exemple, d'au moins 10 %, par rapport à un système non modifié en utilisant la même machine de soufflage et les mêmes paramètres d'exploitation avec un tuyau non modifié,
où le tuyau non modifié inclut les mêmes sections de tuyau que le tuyau d'isolant en vrac qui sont couplées à des modules de raccordement présentant une surface intérieure lisse de diamètre constant et un diamètre intérieur qui est le même que la portion de surface principale de la première surface intérieure de la première section de raccordement.
